**Europäisches Patentamt**

**European Patent Office**

**Office européen des brevets**

(19)

(11) Numéro de publication : **0 336 791 B1**

## (12) FASCICULE DE BREVET EUROPEEN

(45) Date de publication du fascicule du brevet :
**23.12.92 Bulletin 92/52**

(51) Int. Cl.$^5$ : **F25D 3/06,** B65D 81/38

(21) Numéro de dépôt : **89400618.8**

(22) Date de dépôt : **06.03.89**

(54) Conteneur pour le transport de greffons.

(30) Priorité : **07.03.88 FR 8802845**

(43) Date de publication de la demande :
**11.10.89 Bulletin 89/41**

(45) Mention de la délivrance du brevet :
**23.12.92 Bulletin 92/52**

(84) Etats contractants désignés :
**BE CH DE ES FR GB LI**

(56) Documents cités :
**CH-A- 375 658
DE-A- 3 627 201
FR-A- 2 581 513
US-A- 4 530 816**

(73) Titulaire : **Guilhem, Jacques René Jean
28 rue du Commandant Henry Vesco
F-76310 Sainte-Adresse (FR)**
Titulaire : **Wenger, Roger Léon Lucien
37 rue Mac Orlan
F-76600 Le Havre (FR)**

(72) Inventeur : **Guilhem, Jacques René Jean
28 rue du Commandant Henry Vesco
F-76310 Sainte-Adresse (FR)**
Inventeur : **Wenger, Roger Léon Lucien
37 rue Mac Orlan
F-76600 Le Havre (FR)**

(74) Mandataire : **Bernasconi, Jean et al
CABINET LEMOINE ET BERNASCONI 13,
Boulevard des Batignolles
F-75008 Paris (FR)**

## Description

La présente invention a trait à un conteneur isotherme, destiné notamment au transport de greffons, en particulier coeur ou ensemble coeur-poumons, à une température constante égale à +4°C.

Le développement récent des greffes d'organes a fait apparaître le besoin d'un dispositif permettant le transport d'un organe à transplanter, de l'hôpital du donneur à celui du receveur et cela dans les conditions requises.

Les conditions à respecter impérativement sont une température constante égale à +4°C et une asepsie totale, étant entendu que le greffon doit être conservé dans du sérum physiologique.

La question de l'asepsie a été résolue notamment par l'utilisation d'un triple emballage mettant en oeuvre des sacs en matière plastique, l'un, rigoureusement stérile, au contact du greffon, le second en guise de sécurité supplémentaire, le troisième, externe, autorisant la manipulation du greffon.

Par contre, le problème de l'imposition et du maintien de la température à +4°C n'a pas, jusqu'ici, trouvé de solution satisfaisante. Le transport s'effectue actuellement dans des conteneurs du type glacière de camping dans lesquels on introduit de la glace en quantité suffisante, en fonction de la température extérieure et de la durée du transport. Il apparaît donc clairement qu'il ne s'agit pas d'une véritable régulation de température avec tous les problèmes que cela peut engendrer.

Il faut bien comprendre que la résolution de ce problème ne pouvait se concevoir avec une augmentation importante de poids et d'encombrement et un apport d'énergie extérieur, la facilité de transport étant une condition importante.

La présente invention vise à résoudre ce problème, en proposant un conteneur permettant, sans supplément d'encombrement par rapport aux conteneurs de l'art antérieur, une mise à +4°C puis une autorégulation à +4°C pour une durée suffisante prédéterminée et qui soit d'un poids raisonnable et d'un coût de fabrication peu élevé.

Un autre objectif de l'invention est de fournir un conteneur de transport de greffons à +4°C, qui soit simple, robuste et dont le fonctionnement soit indéréglable.

Un autre objectif encore de l'invention est de fournir un conteneur de transport de greffons à +4°C dont l'autonomie est au moins de 10 heures dans des conditions de température extérieure normales.

L'invention a pour objet un conteneur formé d'une cuve et d'un couvercle isolés thermiquement du milieu extérieur, destiné au transport de greffons à +4°C et comprenant un volume périphérique d'eau, tel que chemise d'eau ou enceinte périphérique, caractérisé par un échangeur de chaleur indirect situé à la partie supérieure du conteneur, de préférence à la partie inférieure du couvercle, et en ce que ledit échangeur assure un transfert thermique entre une source thermique susjacente à température constante et la couche d'eau située à la partie supérieure dudit volume.

Un conteneur selon le préambule de la revendication 1 est connu par le document DE-A-3.627.201. Dans ce cas, l'échangeur de chaleur est constitué par un simple orifice faisant communiquer, par leurs parties supérieures respectives, une chambre qui contient un mélange d'eau et de glaçons et une chambre qui contient de l'eau et une enceinte recevant le greffon. L'efficacité de l'échangeur de chaleur direct ainsi constitué risque d'être amoindrie par l'obstruction du susdit orifice par les glaçons.

La source thermique est, par exemple, une source de froid constituée notamment d'eau et de glace au voisinage de 0°C. Dans le cas d'une température externe supérieure à +4°C, il se produit des échanges thermiques entre l'intérieur du conteneur et le milieu extérieur. L'eau qui se réchauffe au-dessus de +4°C monte à la partie supérieure de la cuve, en raison de sa densité moindre par rapport à celle de l'eau à +4°C. Il s'établit donc un flux thermique, dirigé vers la source de froid, et il s'ensuit un refroidissement, essentiellement par conduction, de cette couche d'eau supérieure qui, en atteignant +4°C, laissera sa place, s'il y a lieu, à de l'eau plus chaude. En d'autres termes, on obtient une certaine stratification de l'eau dans la cuve, la plus grande partie de la cuve étant à +4°C et la couche d'eau supérieure présentant une température tendant à se rapprocher de +4°C. Le greffon reste donc toujours en contact ou au voisinage de l'eau à +4°C.

Si de l'eau de la cuve se refroidit en dessous de +4°C, cette eau monte ou reste dans la partie supérieure de la cuve, en raison d'une densité moindre par rapport à celle de l'eau à +4°C. Le gradient de température étant très faible, le flux thermique diminue et l'échange thermique se bloque et, en raison de la quasi-absence de convection et de la faiblesse de la conduction, on aboutit à un maintien temporaire de la situation.

Lorsque la température externe est en permanence inférieure à +4°C, il peut être utile de remplacer la source de froid par une source de chaleur.

Dans tous les cas, les variations de température se localisent au niveau de l'échangeur de chaleur et sont donc sans effet sur le greffon, à condition, bien sûr, que la source thermique ne soit pas épuisée.

De préférence, le conteneur selon l'invention se caractérise par le fait que son couvercle comporte une enceinte pour loger la source thermique et une ouverture, qui se ferme hermétiquement, pour l'introduction de la source thermique.

De préférence, l'échangeur de chaleur est constitué par des pièces réalisées en métal bon conducteur thermique, fixées au couvercle et agencées de façon à pénétrer dans l'enceinte contenant la source thermique et à dépasser du couvercle dans le sens opposé pour pénétrer dans la partie supérieure de la chemise d'eau ou enceinte périphérique. Le nombre et les caractéristiques de ces pièces métalliques dépendront, bien entendu, des dimensions du conteneur et des échanges thermiques avec le milieu extérieur. Pourtant, l'invention a l'avantage de ne pas être trop sensible à la précision apportée dans le choix des dimensions de ces pièces métalliques. On pourra prendre le soin de prévoir ces dimensions en fonction des conditions extrêmes de température susceptibles d'être rencontrées, en particulier les températures les plus élevées.

Dans un mode de réalisation particulier de l'invention, les pièces pour l'échange thermique sont des tétons métalliques creux destinés à recevoir un certain volume de gaz à l'état liquide, ledit gaz, à l'état gazeux, étant condensable aux environs de 0°C. Les tétons sont munis d'une valve de remplissage et d'une soupape à la manière, par exemple, des briquets.

Grâce à cette réalisation, les échanges thermiques sont accélérés. Le réchauffement du gaz liquide à la partie inférieure des tétons provoque une transformation de liquide en gaz, le gaz passe dans le volume libre supérieur des tétons et vient se condenser sur les parois de ceux-ci, lesquelles sont à 0°C environ.

Le gaz employé peut être avantageusement du butane.

De préférence, les pièces métalliques formant l'échangeur de chaleur sont réalisées dans un alliage d'aluminium/magnésium (AG3 ou AG5) insensible aux chlorures pour permettre une désinfection périodique par eau de Javel.

Dans un mode de réalisation, la cuve du conteneur est divisée, par une cloison, en une enceinte principale recevant le greffon et éventuellement de l'eau entre 0°C et +4°C et une enceinte périphérique ouverte à sa partie supérieure de manière que les pièces métalliques réalisant l'échangeur de chaleur puissent y pénétrer lors de la mise en place du couvercle.

La cloison de séparation des deux enceintes est de préférence constituée en matière plastique.

Dans un autre mode de réalisation avantageux, l'enceinte pour loger la source thermique et l'enceinte périphérique sont amovibles par rapport à des parois isolantes formant respectivement le couvercle et la cuve.

Dans les deux cas, les variations de température dues aux échanges thermiques avec le milieu extérieur, seront confinées au niveau de l'enceinte périphérique. L'enceinte principale sera pratiquement indemne de variations thermiques.

Afin de minimiser au maximum la convection tout en respectant une isolation suffisante de l'enceinte principale, l'épaisseur de l'enceinte périphérique est choisie relativement étroite, de préférence environ 40 mm.

Dans ces modes de réalisation, lors de la mise en place d'un greffon dans l'enceinte principale, l'enceinte périphérique est, par exemple, remplie d'eau entre +1°C et +4°C. En variante, il est possible de remplir l'enceinte périphérique avec une eau à une température qui prenne en compte la température interne du greffon en question. Connaissant le volume exact de l'enceinte périphérique et la chaleur spécifique du greffon, on amène la température de l'eau destinée à l'enceinte périphérique à une valeur telle, que le flux thermique nécessaire à amener le greffon à +4°C est grandement compensé, sans que l'échangeur de chaleur ait beaucoup à intervenir. Une économie de temps et de source de froid en résulte.

La source thermique, de préférence un mélange d'eau et de glace, qui est avantageusement logée dans le couvercle, et qui est en rapport avec l'extrémité supérieure de l'échangeur, peut avoir toute forme géométrique. Elle peut être isolée thermiquement ou non de la cuve. Cependant, de préférence, la source s'étend sensiblement, au-dessus de la cuve, sur sensiblement toute la largeur de la cuve, le logement de la source ayant un fond plat, de sorte que la partie la plus dense de l'eau du mélange eau/glace de la source reposera sur ce fond dont la température tendra vers +4°C, complétant ainsi l'enceinte périphérique d'eau à +4°C.

On préférera que les conducteurs thermiques de l'échangeur, par exemple des tiges métalliques, pénètrent, vers le haut, sur une certaine distance au-dessus du fond de la source, afin d'être au contact de la partie la plus froide de la source.

Le conteneur selon l'invention est de préférence cylindrique.

Pour le transport de coeur à greffer, le conteneur présente, de préférence, un diamètre externe de l'ordre de 390 mm pour une hauteur hors-tout de l'ordre de 470 mm.

Pour le transport d'un ensemble coeur-poumons, le conteneur présente, de préférence, un diamètre externe de l'ordre de 480 mm pour une hauteur hors-tout de l'ordre de 540 mm. L'épaisseur de l'enceinte périphérique est de l'ordre de 40 mm, en ce qui concerne la partie périphérique latérale, et de l'ordre de 50 mm, en ce qui concerne le fond. Le calorifugeage a une épaisseur de l'ordre de 50 à 75 mm. Les tiges métalliques réalisant l'échangeur de chaleur sont au nombre de 6 et présentent un diamètre de 20 mm pour une longueur de 80 mm.

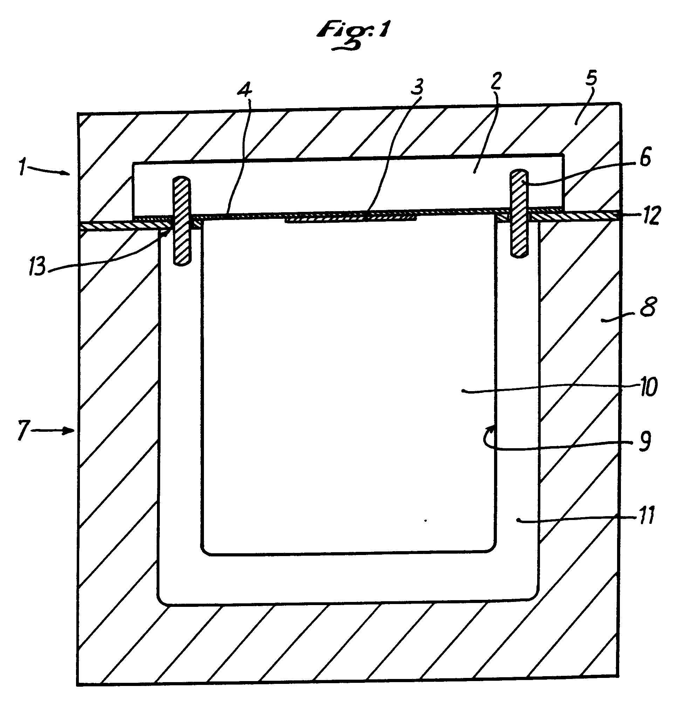

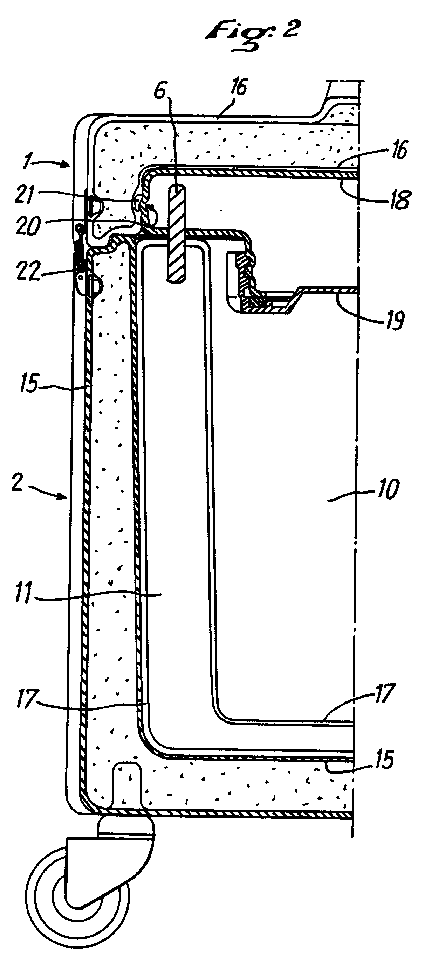

L'invention va être maintenant décrite plus en détail à l'aide du dessin annexé qui présente, à la figure 1, une coupe diamétrale d'un conteneur cylindrique selon un mode de réalisation de l'invention, le dispositif de fermeture, élastique de préférence, du conteneur n'étant pas représenté, et, à la figure 2, une coupe partielle d'un autre mode de réalisation préféré.

Si l'on se reporte à la figure 1, le couvercle 1 du conteneur comporte une enceinte 2 pour loger la source thermique et une ouverture, qui se ferme hermétiquement au moyen d'un bouchon 3 et qui est située dans la paroi inférieure 4 du couvercle 1. Ce couvercle 1 présente également un calorifugeage 5.

Selon la figure 1, l'échangeur de chaleur est constitué par des tiges métalliques 6 fixées à la paroi inférieure 4 du couvercle 1 et qui pénètrent dans l'enceinte 2. Ces tiges 6 sont opposées diamétralement deux à deux.

La cuve 7 présente un calorifugeage 8 qui en constitue l'armature. Elle est divisée, par une cloison 9, en une enceinte principale 10 recevant le greffon et une enceinte périphérique 11, une plaque annulaire 12 isolante étant agencée à la partie supérieure de l'enceinte périphérique 11 et fixée sur le calorifugeage 8. Cette plaque annulaire 12 présente des trous 13 destinés à laisser passer les tiges métalliques 6 constituant l'échangeur de chaleur, tiges qui pénètrent dans l'enceinte périphérique 11, lors de la mise en place du couvercle 1. Cette plaque annulaire 12 permet la fermeture hermétique de la cuve, tandis que des joints toriques non représentés assurent une étanchéité aussi parfaite que possible de l'enceinte périphérique au niveau des trous 13.

On se réfère maintenant à la figure 2 qui représente un agencement avantageux du couvercle 1 et de la cuve 7.

Le calorifugeage de la cuve 7 est constitué d'une enveloppe extérieure creuse 15 obtenue d'un seul tenant, par exemple par un procédé de moulage par rotation (rotomoulage), et remplie d'une mousse de polyuréthane expansée.

Le calorifugeage du couvercle 1 est réalisé de la même manière. Le repère 16 désigne l'enveloppe extérieure de celui-ci, laquelle est remplie de mousse de polyuréthane expansée.

L'enceinte périphérique 11, qui délimite une enceinte principale 10 recevant le greffon, est constituée d'une enveloppe creuse 17 obtenue d'une seule pièce par rotomoulage. En place, l'enceinte 1 est sensiblement au contact de l'enveloppe 15. L'enceinte 11 est amovible. On peut prévoir des poignées (non représentées), venant de moulage par exemple, pour en faciliter le retrait et la mise en place.

L'enceinte 2 pour loger la source thermique est réalisée aussi de façon amovible. Elle est réalisée en deux pièces, une enveloppe moulée 18 et un moyen de fermeture 19. L'enveloppe moulée 18 est munie d'une saillie latérale 20 qui est destinée à venir en prise avec un renfoncement complémentaire 21 ménagé dans l'enveloppe 16, pour le maintien en place de l'enceinte 2 dans le couvercle.

Le dispositif d'échange de chaleur est identique à celui de la figure 1. Son montage nécessite en plus une opération de perçage de la paroi de l'enceinte périphérique 11. Outre le passage des pièces métalliques 6 pour l'échange de chaleur, les trous obtenus par perçage servent au remplissage de ladite enceinte 11 avec de l'eau réfrigérée.

L'étanchéité de l'enceinte périphérique 11 est plus simple à assurer que dans le mode de réalisation précédent, puisqu'il suffit d'utiliser des joints toriques appropriés (non représentés).

En cas de besoin, on peut parfaire l'étanchéité de l'ensemble par l'emploi d'un moyen d'étanchéité périphérique.

Enfin, la fermeture du conteneur est avantageusement assurée par un dispositif élastique 22, du type à ressort.

Dans ces deux modes de réalisation décrits, on comprend que les pièces métalliques pour l'échange thermique peuvent être constituées soit par des tenons métalliques simples, soit par des tenons métalliques creux comportant un certain volume d'un gaz à l'état liquide, tel que du butane. Dans ce dernier cas, les tenons comportent chacun une valve de remplissage et une soupape.

En outre, le conteneur selon l'invention est avantageusement muni de poignées extérieures, aussi bien sur la cuve que sur le couvercle, ainsi que de moyens d'arrimage, venant tous de moulage, par exemple, de façon à en faciliter la manipulation et le transport.

**Revendications**

1.  Conteneur formé d'une cuve (7) et d'un couvercle (1) isolés thermiquement du milieu extérieur, destiné au transport de greffons à + 4°C et comprenant un volume périphérique d'eau, tel que chemise d'eau ou enceinte périphérique (11), caractérisé par un échangeur de chaleur indirect situé à la partie supérieure du conteneur, de préférence à la partie inférieure du couvercle (1), et en ce que ledit échangeur assure un transfert thermique entre une source thermique susjacente à température constante et la couche d'eau située à la partie supérieure dudit volume.

2.  Conteneur selon la revendication 1, caractérisé en ce que la source thermique est constituée par de la glace et de l'eau au voisinage de 0°C.

3.  Conteneur selon la revendication 1, caractérisé en ce que le couvercle (1) comporte une enceinte (2) pour loger la source thermique et une ouverture, qui se ferme hermétiquement, pour l'introduction de la source thermique.

4.  Conteneur selon la revendication 3, caractérisé en ce que l'échangeur de chaleur est constitué par des pièces (6) réalisées en métal bon conducteur thermique, fixées au couvercle (1) et agencées de façon à pénétrer dans l'enceinte (2) contenant la source thermique et à dépasser du couvercle (1) dans le sens opposé pour pénétrer dans la partie supérieure de volume, tel que chemise d'eau ou enceinte périphérique.

5. Conteneur selon la revendication 4, caractérisé en ce que les pièces (6) sont des tétons métalliques creux destinés à recevoir un certain volume de gaz à l'état liquide, ledit gaz, à l'état gazeux, étant condensable aux environs de 0°C.

6. Conteneur selon la revendication 5, caractérisé en ce que le gaz est du butane.

7. Conteneur selon l'une des revendications 4 à 6, caractérisé en ce que les pièces métalliques (6) sont réalisées dans un alliage d'aluminium/magnésium.

8. Conteneur selon l'une des revendications 4 à 7, caractérisé en ce que l'intérieur du conteneur est divisé, par une cloison (9), en une enceinte principale (10) recevant le greffon et l'enceinte périphérique (11), celle-ci présentant des ouvertures agencées de manière que les pièces métalliques (6) réalisant l'échangeur de chaleur puissent y pénétrer lors de la mise en place du couvercle (1).

9. Conteneur selon la revendication 8, caractérisé en ce que l'enceinte (2) pour loger la source thermique et l'enceinte périphérique (11) sont amovibles par rapport à des parois isolantes (5) formant respectivement le couvercle (1) et la cuve (7).

10. Conteneur selon la revendication 8 ou 9, caractérisé en ce que l'épaisseur de l'enceinte périphérique (11) est relativement petite.

11. Conteneur selon la revendication 8 ou 9, caractérisé en ce que, lors de la mise en place d'un greffon dans l'enceinte principale (10), l'enceinte périphérique (11) est remplie d'eau à +4°C.

12. Conteneur selon l'une des revendications 8, 9 et 11, caractérisé en ce que, lors de la mise en place d'un greffon dans l'enceinte principale (10), l'enceinte périphérique (11) est remplie d'eau dont la température prend en compte le flux thermique nécessaire pour amener le greffon à une température uniforme voisine de +4°C.

13. Conteneur selon la revendication 3, caractérisé en ce que le fond de l'enceinte (2) contenant la source thermique n'est pas isolé thermiquement.

**Patentansprüche**

1. Transportbehälter, gebildet durch ein Aufnahmegefäß (7) und eine Abdeckhaube (1), die nach außen thermisch isoliert sind, bestimmt zum Transport von Organsspenden bei + 4° C und mit einem Umfangsraum mit Wasser, wie ein Kühlmantel oder eine Umfangsaufnahme (11),
   **gekennzeichnet durch,**
   eine indirekten Wärmeaustauscher, der am Oberteil des Transportbehälters angeordnet ist, vorzugsweise am inneren Teil der Abdeckhaube (1), hierbei sichert der Wärmeaustauscher eine Wärmeübertragung zwischen einer darüberliegenden thermischen Quelle bei konstanter Temperatur und der auf dem oberen Teil des Umfangsvolumens vorgesehenen Wasserchicht.

2. Transportbehälter nach Anspruch 1, dadurch gekennzeichnet, daß die thermische Quelle aus Eis und Wasser in der Nähe von 0° C liegt.

3. Transportbehälter nach Anspruch 1, dadurch gekennzeichnet, daß die Abdeckhaube (1) eine Aufnahme (2) umfaßt zur Unterbringung der thermischen Quelle sowie einer hermetisch abschließenden Öffnung, die zur Einführung der thermischen Quelle dient.

4. Transportbehälter nach Anspruch 3, dadurch gekennzeichnet, daß der Wärmeaustauscher aus Teilen (6) gebildet ist, die als guter Wärmeleiter aus Metall ausgebildet und in der Abdeckhaube (1) angeordnet sind, derart, daß sie in die Aufnahme (2) eindringen, die die thermische Quelle enthält und die Abdeckhaube im entgegengesetzten Sinne überstehen, um in das obere Teil des Umfangsvolumens einzudringen, wie in den Kühlwassermantel oder die Umfangsaufnahme.

5. Transportbehälter nach Anspruch 4, dadurch gekennzeichnet, daß die Teile (6) als hohle, metallische Ansätze ausgebildet sind, die bestimmt sind zur Aufnahme eines gewissen Volumens eines Gases im flüssigen Zustand, hierbei ist das Gas im gasförmigen Zustand kondensierbar bei ca. 0° C.

6. Transportbehälter nach Anspruch 5, dadurch gekennzeichnet, daß das Gas Butangas ist.

7. Transportbehälter nach einem der Ansprüche 4 bis 6, dadurch gekennzeichnet, daß die metallischen Teile (6) aus einer Aluminium-Magnesium-Legierung bestehen.

8. Transportbehälter nach einem der Ansprüche 4 bis 7, dadurch gekennzeichnet, daß das Innere des Transportbehälters durch eine Zwischenwand (9) unterteilt ist in eine Hauptaufnahme (10), die die Organspende aufnimmt, und eine Umfangsaufnahme (11), die Öffnungen bildet, die derart angeordnet sind, daß die metallischen Teile (6), die den Wärmeaustauscher bilden eindringen können, während sie in der Abdeckhaube eingesetzt sind.

9. Transportbehälter nach Anspruch 8, dadurch gekennzeichnet, daß die Aufnahmen (2), zur Unterbringung der thermischen Quelle, und die Umfangsaufnahme in Bezug auf die die Abdeckhaube (1) und das Aufnahmegefäß (7) bildenden Isolierwände (5) lösbar angeordnet sind.

10. Transportbehälter nach einem der Ansprüche 8 oder 9, dadurch gekennzeichnet, daß die Dicke der Umfangsaufnahme (11) relativ klein gestaltet ist.

11. Transportbehälter nach einem der Ansprüche 8 oder 9, dadurch gekennzeichnet, daß bei Aufnahme einer Organspende in die Hauptaufnahme (10) die Umfangsaufnahme (11) mit Wasser bei + 4° C angefüllt ist.

12. Transportbehälter nach einem der Ansprüche 8, 9 und 11, dadurch gekennzeichnet, daß bei Aufnahme einer Organspende in der Hauptaufnahme (10) die Umfangsaufnahme mit Wasser gefüllt ist, dessen Temperatur so gewählt ist, daß die erforderlichen thermischen Schwankungen berücksichtigt werden, die erforderlich sind, um die Organspende zu einer einheitlichen Temperatur von ca. + 4° C zu bringen.

13. Transportbehälter nach 3, dadurch gekennzeichnet, daß der Boden der die Wärmequelle enthaltenden Aufnahme (2) nich wärmeisoliert ist.

**Claims**

1. A container formed by a vessel (7) and a lid (1) thermally insulated from the exterior medium, intented for transporting grafts at +4°C and comprising a peripheral volume of water, such as a water jacket or peripheral enclosure (11), characterized by an indirect heat exchanger located in the upper part of the container, preferably in the lower part of the lid (1), and in that said exchanger ensures a thermal transfer between a superjacent thermal source at constant temperature and the layer of water located in the upper part of said volume.

2. Container according to claim 1 characterized in that the thermal source is constituted by ice and water at about 0°C.

3. Container according to claim 1, characterized in that the lid (1) comprises an enclosure (2) for disposing the thermal source and an opening, which closes hermetically for the introduction of the thermal source.

4. Container according to claim 3, characterized in that the heat exchanger is constituted by members (6) made from metal which is a good conductor of heat, fixed to the lid (1) and arranged in such manner as to penetrate the enclosure (2) containing the thermal source and to extend beyond the lid (1) in the opposite direction so as to penetrate the upper part of volume, such as a water jacket or peripheral enclosure.

5. Container according to claim 4, characterized in that the members (6) are hollow metal studs adapted to receive a certain volume of gas in the liquid state, said gas, in the gaseous state, being condensable at about 0°C.

6. Container according to claim 5, characterized in that the gas is butane.

7. Container according to any one of the claims 4 to 6, characterized in that the metal members (6) are made from an aluminium/magnesium alloy.

8. Container according to any one of the claims 4 to 7, characterized in that the interior of the container is divided by a partition (9) into a principal enclosure (10) receiving the graft and the peripheral enclosure (11) having openings so adapted that the metal members (6) realizing the heat exchanger are capable of penetrating therein when the lid (1) is placed in position.

9. Container according to claim 8, characterized in that the enclosure (2) for disposing the thermal source and the peripheral enclosure (11) are removable relative to insulating walls (5) respectively forming the lid (1) and the vessel (7).

10. Container according to claim 8 or 9, characterized in that the thickness of the peripheral enclosure (11) is relatively small.

11. Container according to claim 8 or 9, characterized in that, when a graft is placed in position in the principal enclosure (10), the peripheral enclosure (11) is filled with water at +4°C.

12. Container according to any one of the claims 8, 9 and 11, characterized in that, when a graft is placed in position in the principal enclosure (10), the peripheral enclosure (11) is filled with water at a temperature which takes into account the thermal flow required for bringing the graft to a uniform temperature of about +4°C.

13. Container according to claim 3, characterized in that the bottom of the enclosure (2) containing the thermal source is not thermally insulated.

Fig.1

Fig. 2